# EUROPEAN PATENT APPLICATION

(11) **EP 2 381 292 A1**
(43) Date of publication of application: **26.10.2011**
(21) Application number: 10168694.7
(22) Date of filing: 07.07.2010
(51) Int. Cl.: G02B 27/22, G02B 27/01, G02C 7/10, G02C 9/00, H04N 13/00, G02B 27/00

(54) **Lens assembly for viewing three-dimensional (3D) images integrated with prescription lens**

(30) Priority: 23.04.2010 KR 20100037711
(71) Applicant: Korea O.G.K CO. LTD., Wonju-si, Gangwon-do 220-822 (KR)
(72) Inventor: PARK, Su AN, 220-822, Wonju-si (KR)
(74) Representative: Viering, Jentschura & Partner

(57) **Abstract**

Disclosed is a lens assembly for viewing three-dimensional (3D) images wherein a lens for viewing three dimensional imaging is provided with a gasket (40) and the gasket is integrated with a prescription lens, thus considerably advantageously realizing three dimensional imaging through one lens without wearing additional prescription lens.

## Description

### BACKGROUND OF THE INVENTION

### Field of the Invention

The present invention relates to a lens assembly for viewing three-dimensional (3D) images integrated with a prescription lens. More specifically, the present invention relates to a lens assembly for viewing three-dimensional (3D) images, enabling three dimensional imaging through one lens without wearing any prescription lens, and more particularly, to a lens assembly for viewing three-dimensional (3D) images, provided with a gasket suited to the shape of a prescription lens.

### Description of the Related Art

Imaging technologies to realize three-dimensional images are divided into active imaging (using an LCD) and passive imaging (using a polarizing film). Of these, the active imaging system has a structure comprising a polarizing layer/glassy liquid crystal/polarizing layer, wherein the polarizing layer may be composed of TAC/PVA/TAC or PC/PVA/PC.

A structure wherein prescription glasses are superimposed on 3D active glasses provided with such a lens, that is, two glasses are worn simultaneously, may disadvantageously cause considerable user discomfort and cannot render viewing with superior three-dimensional effects and clear image quality due to light refraction or deterioration in light transmission in the space provided between the prescription lens and the 3D lens.

Accordingly, the present invention solves the aforementioned problems, i.e., inconvenience of users having different eyesights and drawbacks of conventional lens assemblies for viewing three-dimensional (3D) images.

### SUMMARY OF THE INVENTION

Therefore, the present invention has been made in view of the above problems and it is one aspect to provide a lens assembly for viewing three-dimensional (3D) images wherein a prescription lens provided with a gasket suited to the eyesight of a watcher is integrally stuck or adhered to the inner surface of an active-type 3D eyeglass lens, to realize comfortable wearing, and clear and superior three-dimensional imaging.

It is another aspect to provide a lens assembly for viewing three-dimensional (3D) images which solves inconvenient wearing of convex lenses upon mounting and provides easy engagement and detachment.

It is another aspect to provide a lens assembly for viewing three-dimensional (3D) images wherein transparent silicon is inserted between an LCD panel lens and a prescription lens to reduce shock therebetween and prevent permeation of foreign materials therebetween.

In accordance with one aspect of the present invention, provided is a lens assembly for viewing three-dimensional (3D) images through an LCD panel lens portion, wherein a prescription lens for vision correction provided with a gasket is joined to the inner side (toward the eye of a wearer) of the LCD panel lens portion providing viewing three-dimensional (3D) images.

In one embodiment, the lens assembly may include: a liquid crystal panel provided in the center thereof; a pair of glass panels adhered to both sides of the liquid crystal panel; a pair of TAC panels adhered to the outer sides of the glass panels; a pair of PVA panels adhered to the outer sides of the TAC panels; a pair of TAC panels adhered to the outer sides of the PVA panels; a gasket adhered to the inner side of the inner TAC panel; and a prescription lens adhered to the gasket.

In another embodiment, the lens assembly may include: a liquid crystal panel provided in the center; a pair of glass panels adhered to both sides of the liquid crystal panel; a pair of PC panels adhered to the outer sides of the glass panels; a pair of PVA panels adhered to the outer sides of the PC panels; a pair of PC panels adhered to the outer sides of the PVA panels; a gasket adhered to the inner side of the inner PC panel; and a prescription lens adhered to the gasket.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a perspective view illustrating eyeglasses for viewing three-dimensional (3D) images of the present invention;
FIG. 2 is a perspective view illustrating eyeglasses for viewing three-dimensional (3D) images of the present invention;
FIG. 3 is an exploded sectional view illustrating a lens assembly for viewing three-dimensional (3D) images of the present invention;
FIG. 4 is an exploded sectional view illustrating a lens assembly for viewing three-dimensional (3D) images of the present invention;
FIG. 5 is an exploded sectional view illustrating a lens assembly for viewing three-dimensional (3D) images of the present invention;
FIG. 6 is an exploded sectional view illustrating a lens assembly for viewing three-dimensional (3D) images of the present invention;
FIG. 7 is an exploded sectional view illustrating a lens assembly for viewing three-dimensional (3D) images of the present invention;
FIG. 8 is an exploded sectional view illustrating a lens assembly for viewing three-dimensional (3D) images of the present invention;
FIG. 9 is an exploded sectional view illustrating a lens assembly for viewing three-dimensional (3D) images of the present invention; and
FIG. 10 is an exploded sectional view illustrating a lens assembly for viewing three-dimensional (3D) images of the present invention.

### DETAILED DESCRIPTION OF THE INVENTION

Hereinafter, a lens assembly for viewing three-dimensional (3D) images integrated with a prescription lens will be described with reference to the annexed drawings in detail.

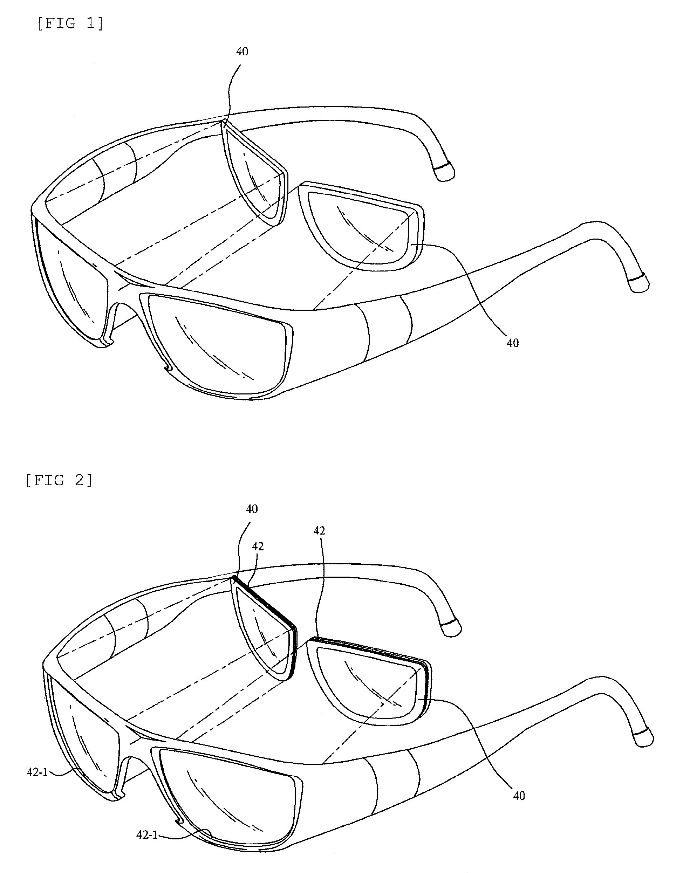

FIG. 1 is a perspective view illustrating a state wherein a prescription lens provided with a gasket is joined to eyeglasses for viewing three-dimensional (3D) images integrated with a prescription lens. FIG. 2 is a perspective view illustrating a state wherein a gasket having a projection is joined to eyeglasses for viewing three-dimensional (3D) images integrated with a prescription lens.

The present invention provides a lens assembly for viewing three-dimensional (3D) images enabling viewing of three-dimensional images through an LCD panel lens portion 60 wherein a prescription lens for vision correction provided with a gasket 40 is joined to the inner side of the LCD panel lens portion 60 (toward the eye of a wearer) providing three-dimensional images.

The present invention provides a lens assembly for viewing three-dimensional (3D) images in an active manner (using an LCD). Herein, the lens assembly is referred to as an "LCD panel lens portion 60".

The LCD panel lens portion 60 of the present invention comprises a liquid crystal panel 21 provided in the center thereof; glass panels 22 and 22' adhered to both sides of the liquid crystal panel 21; TAC panels 24 and 24' adhered to the outer sides of the glass panels 22 and 22'; PVA panels 26 and 26' adhered to the outer sides of the TAC panels 24 and 24'; and TAC panels 28 and 28' adhered to the outer sides of the PVA panels 26 and 26'. In addition, the LCD panel portion 60 comprises a gasket 40 adhered to the surface of the inner TAC panel 28' and a prescription lens 50 or 50-1 mounted to the gasket 40.

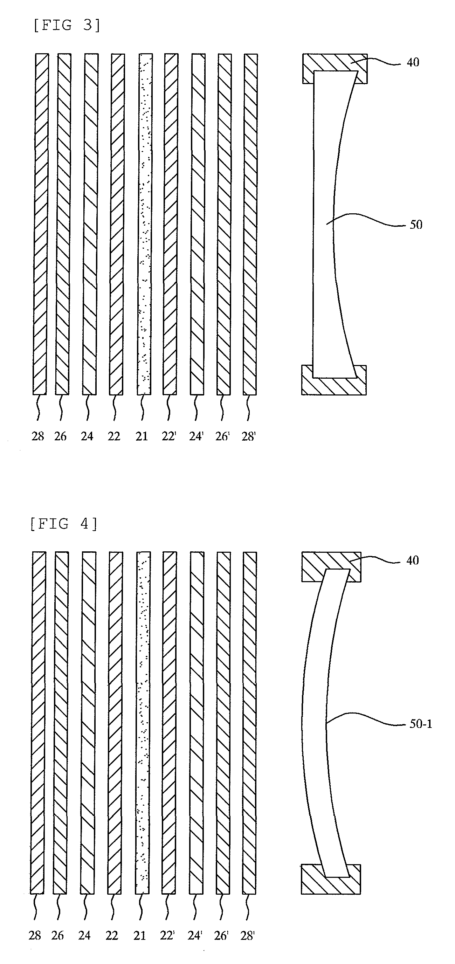

As shown in FIG. 3, the lens assembly of the present invention for viewing three-dimensional (3D) images has a flat outer surface and a concave (or convex) inner surface. In addition, as shown in FIG. 4, for the lens assembly of the present invention for viewing three-dimensional (3D) images, the prescription lens 50-1 has a convex outer surface and a concave inner surface. The lens assembly for viewing three-dimensional (3D) images is composed of a material selected from CR, PC, glass, an organic compound and acryl. For the lens assembly for viewing three-dimensional (3D) images, the gasket 40 has a projection 42 to be mounted on a groove 42-1 provided in an eyeglass frame.

In addition, the LCD panel lens portion 60 comprises a liquid crystal panel 21 provided in the center thereof; glass panels 22 and 22' adhered to both sides of the liquid crystal panel 21; PC panels 23 and 23' adhered to the outer sides of the glass panels 22 and 22'; PVA panels 26 and 26' adhered to the outer sides of the PC panels 23 and 23'; PC panels 29 and 29' adhered to the outer sides of the PVA panels 26 and 26'; a gasket 40 adhered to the inner side of the inner PC panel 29'; and a prescription lens 50 or 50-1 integrated with the gasket 40.

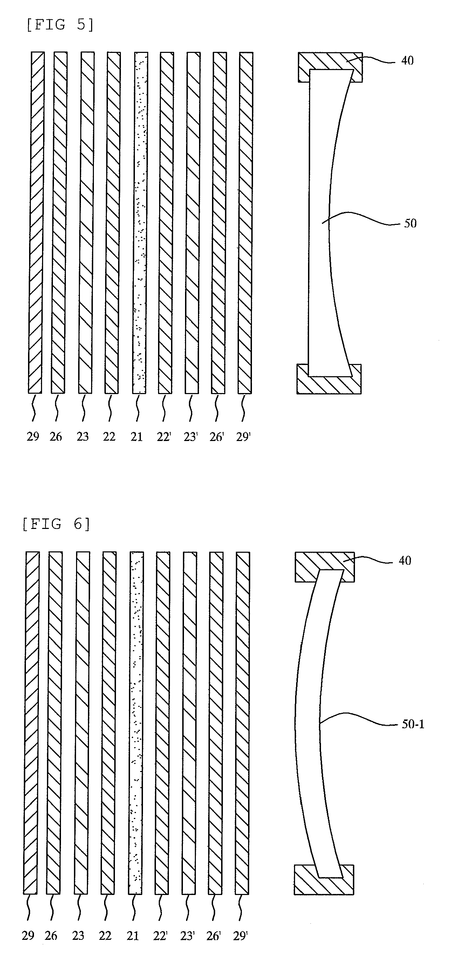

As shown in FIG. 5, the lens assembly for viewing three-dimensional (3D) images has a flat outer surface and a concave inner surface. In addition, as shown in FIG. 6, for the lens assembly of the present invention for viewing three-dimensional (3D) images, the prescription lens 50-1 has a convex outer surface and a concave inner surface. The lens assembly for viewing three-dimensional (3D) images is composed of a material selected from CR, PC, glass, an organic compound and acryl. For the lens assembly for viewing three-dimensional (3D) images, the gasket 40 has a projection 42 to be mounted on a groove 42-1 provided in an eyeglass frame.

The lens assembly for viewing three-dimensional (3D) images has a structure wherein a monolithic lens for viewing three-dimensional (3D) images is integrated with a prescription lens realizing three dimensional imaging through one lens without wearing any prescription glasses 50 and 50-1 and processed to be suited to the eyesight of a watcher, thus being suitable for the eyesight of a wearer and realizing comfortable wearing, while viewing high-quality images without wearing any prescription glasses. Hereinafter, the specific configurations of the present invention will be illustrated with reference to the annexed drawings in detail.

As shown in FIGS. 3 and 4, the lens assembly for viewing three-dimensional (3D) images comprises a liquid crystal panel 21 provided in the center thereof, glass panels 22 and 22' mounted at both sides of the liquid crystal panel 21, to protect the liquid crystal panel 21, and TAC films 24 and 24', PVA films 26 and 26', and TAC films 28 and 28' stuck or adhered to the outer sides of the glass panel 22 and 22' such that they are laminated in this order. In addition, the lens assembly further comprises a gasket 40 adhered to the inner TAC panel 28' and a prescription lens 50 or 50-1 adhered to the gasket 40.

For the lens assembly for viewing three-dimensional (3D) images, since the liquid crystal panel 21 is soft, it is provided at the both surfaces thereof with glass panels 22 and 22' for safe protection, and TAC (triacetyl cellulose) films 28 and 28' are adhered to the outer sides of the glass panels 22 and 22'. TAC (triacetyl cellulose) films 28 and 28-1 integrally adhered to the lens assembly are oriented in an optically identical direction and exhibit superior transparency and strength, and good dimensional stability when faced with variations in temperature and humidity. In addition, the PVA (polyvinyl alcohol) film 4 adhered to the outer sides of the TAC films 24 and 24' is prepared through stretching and dying processes including stretching a film in one direction and arranging a substance such as iodine, dichroic dyes or the like between a PVA polymer in the other direction, so that the PVA film 4 passes light emitted in one direction and absorbs light emitted in the other direction, thereby acting as a polarizer.

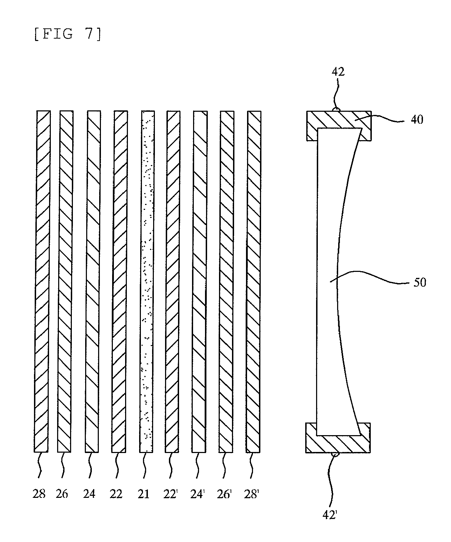

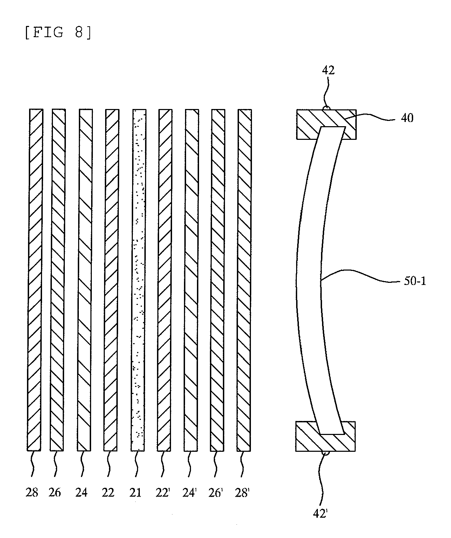

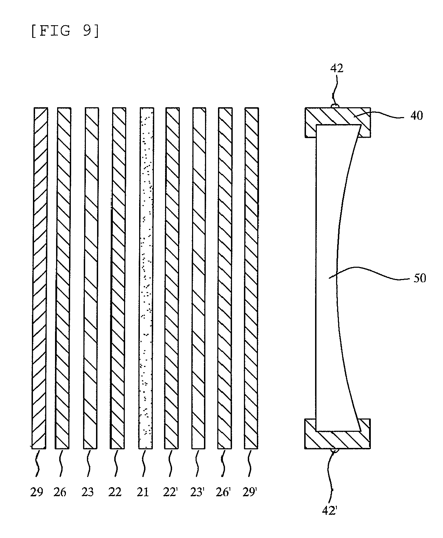

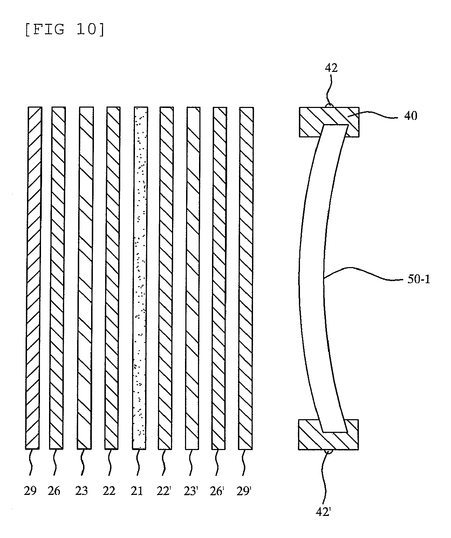

In addition, for the lens assembly for viewing three-dimensional (3D) images, the TAC film 28 arranged in an inner side of the lens assembly is provided at the inner side thereof with a gasket 40 and a prescription lens 50 or 50-1 is adhered to the gasket 40. The prescription lens 50 or 50-1 is processed based on the previously measured eyesight of the user, which is composed of a material selected from CR and PC which exhibit the same effects. As shown in FIGS. 3 to 6, for the lens assembly, the prescription lens 50 or 50-1 is adhered to the gasket 40, and the prescription lens 50 or 50-1 may have a flat outer surface and a concave inner surface, or may have a convex outer surface and a concave inner surface. The prescription lens 9 may be composed of a material selected from CR, PC, glass, acryl and organic compounds. As shown in FIGS. 7 to 10, for the lens assembly for viewing three-dimensional (3D) images, the gasket 40 has a projection 42 to be mounted on a groove 42-1 provided in an eyeglass frame.

In another embodiment, as shown in FIGS. 5 and 6, the lens assembly of the present invention comprises a liquid crystal panel 21 provided in the center thereof; glass panels 22 and 22' adhered to the both sides of the liquid crystal panel 21, to protect the liquid crystal panel 21; and PC panels 23 and 23', PVA panels 26 and 26' and PC panels 29 and 29' stuck or adhered to the outer sides of the glass panels 22 and 22' such that they are laminated in this order. In addition, for the lens assembly, a phase difference film 30 is adhered to the outer side of the outer PC panel 29, a gasket 40 is adhered to the inner side of the inner PC panel 29', and a prescription lens 50 or 50-1 is joined to the gasket 40. The prescription lens 50 or 50-1 is composed of a material selected from CR, PC, glass, acryl and organic compounds and is processed to suit to the eyesight of the user.

In addition, the LCD panel lens portion 60 is further provided at the front surface thereof (the surface on which light is initially incident) with a phase difference film to provide clear three-dimensional (3D) images according to the viewing angle of users.

As apparent from the fore-going, the present invention advantageously provides a lens assembly for viewing three-dimensional (3D) images wherein a lens for viewing three dimensional images is provided with a gasket and the gasket is integrated with a prescription lens, thus considerably advantageously realizing three dimensional imaging without wearing any prescription lens.

The lens for viewing three dimensional images is integrated with a gasket-provided prescription lens processed to be suited to the poor eyesight of a watcher, thus advantageously providing comfortable wearing and clear 3D imaging. In addition, the lens assembly advantageously prevents shock between the 3D lens and the prescription lens and permeation of foreign materials therebetween. The lens assembly eliminates the necessity of wearing a prescription lens on a lens for viewing three dimensional imaging, thus advantageously providing comfortable and clear superior image-quality imaging and thus realizing more interesting 3D imaging.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A prescription lens-provided lens assembly for viewing three-dimensional (3D) images through an LCD panel lens portion,
wherein a prescription lens for vision correction provided with a gasket is joined to the inner side (toward the eye of a wearer) of the LCD panel lens portion providing three-dimensional (3D) images.

2. The prescription lens-provided lens assembly according to claim 1, wherein the LCD panel lens portion comprises:
a liquid crystal panel provided in the center;
a pair of glass panels adhered to both sides of the liquid crystal panel;
a pair of TAC panels adhered to outer sides of the glass panels;
a pair of PVA panels adhered to outer sides of the TAC panels;
a pair of TAC panels adhered to outer sides of the PVA panels;
a gasket adhered to the inner side of the inner TAC panel; and
a prescription lens adhered to the gasket.

3. The prescription lens-provided lens assembly according to claim 1, wherein the prescription lens has a convex outer surface and a concave or convex inner surface.

4. The prescription lens-provided lens assembly according to claim 1, wherein the prescription lens has a flat outer surface and a concave or convex inner surface.

5. The prescription lens-provided lens assembly according to claim 1, wherein the prescription lens is composed of a material selected from CR, PC, glass, acryl and organic compounds.

6. The prescription lens-provided lens assembly according to claim 1, wherein the gasket has a projection to be mounted on a groove provided in an eyeglass frame.

7. The prescription lens-provided lens assembly according to claim 1, wherein the LCD panel lens portion comprises:
a liquid crystal panel provided in the center;
a pair of glass panels adhered to both sides of the liquid crystal panel;
a pair of PC panels adhered to outer sides of the glass panels;
a pair of PVA panels adhered to outer sides of the TAC panels;
a pair of PC panels adhered to outer sides of the PVA panels;
a gasket adhered to the inner side of the inner PC panel; and
a prescription lens adhered to the gasket.

8. The prescription lens-provided lens assembly according to claim 7, wherein the prescription lens has a convex outer surface and a concave or convex inner surface.

9. The prescription lens-provided lens assembly according to claim 7, wherein the prescription lens has a flat outer surface and a concave or convex inner surface.

10. The prescription lens-provided lens assembly according to claim 7, wherein the prescription lens is composed of a material selected from CR, PC, glass, an organic compound and acryl.

11. The prescription lens-provided lens assembly according to claim 7, wherein the gasket has a projection to be mounted on a groove provided in an eyeglass frame.

12. The prescription lens-provided lens assembly according to any one of claims 1 to 10, wherein providing the gasket to the prescription lens and joining the prescription lens to the LCD panel lens portion are carried out using a method selected from sticking, adhering and engaging.

13. The prescription lens-provided lens assembly according to any one of claims 1, 2 and 7, wherein the LCD panel lens portion further comprises a phase difference film provided at the front surface thereof.

14. The prescription lens-provided lens assembly according to claim 1, wherein transparent silicon is inserted between the LCD panel portion and the prescription lens to prevent shock therebetween and permeation of foreign materials therebetween.
